# EUROPÄISCHE PATENTANMELDUNG

(11) **EP 3 839 787 A1**
(43) Veröffentlichungstag der Anmeldung: **23.06.2021**
(21) Anmeldenummer: 19217377.1
(22) Anmeldetag: 18.12.2019
(51) Int. Cl.: G06F 21/60, G06F 21/35, G07B 17/00, G09F 3/00, G06Q 10/08

(54) **VERFAHREN ZUM GESCHÜTZTEN ÜBERMITTELN VON PERSONALISIERTEN DATEN**

(71) Anmelder: Duinigg, Walter, 8861 St. Georgen am Kreischberg (AT); Czar, Bernhard, 8010 Graz (AT); Fritz, Michael, 8200 Eggersdorf (AT)
(72) Erfinder: Dulnigg, Walter, 8861 St. Georgen am Kreischberg (AT)
(74) Vertreter: Röggla, Harald

(57) **Zusammenfassung**

Die Erfindung betrifft ein Verfahren zum geschützten Übermitteln von personalisierten Daten, die in einem an einem Objekt (1) anbringbaren Datenträger (6) gespeichert, wobei bei dem Verfahren unter anderem die folgenden Schritte abgearbeitet werden:
• Erstellen (S3) der personalisierten Daten mit einem ersten Kommunikationsgerät (4), wofür Daten von einem Sender (2) des Objekts (1) für einen Empfänger (3) des Objekts (1) zusammengestellt werden;
• Schützen (S5) der erstellten personalisierten Daten, wofür der personenbezogene Datensatz oder dessen Teil als Sicherheitscode zur Verschlüsselung der personalisierten Daten oder des Links verwendet wird;
• Übertragen (S7) und Speichern der personalisierten Daten im Datenträger (6) und/oder im entfernten Datenserver (7) und/oder Übertragen und Speichern des Links im Datenträger (6);
• Abfragen (S10) des Sicherheitscodes, der zum Schutz der personalisierten Daten verwendet wurde, im zweiten Kommunikationsgerät (5);
• Auslesen (S11) der personalisierten Daten aus dem Datenträger (6) und/oder dem entfernten Datenserver (7) unter Verwendung des Sicherheitscodes und Wiedergeben der personalisierten Daten.

## Beschreibung

Die Erfindung betrifft ein Verfahren zum geschützten Übermitteln von personalisierten Daten, die in einem an einem Objekt anbringbaren Datenträger gespeichert oder über einen im Datenträger gespeicherten Link von einem entfernten Datenserver abrufbar sind.

Aus dem Stand der Technik ist bekannt, einen QR-Code auf einem Paket anzubringen, um mit dem Paket gleichzeitig Multimediadateien an den Empfänger zu übermitteln. Beispielsweise kann der QR-Code einen Link aufweisen, der auf Multimediadaten verweist, die in einem entfernten Server gespeichert sind, sodass diese Daten durch den QR-Code vom Empfänger abrufbar sind. Diese Multimediadaten können beispielsweise eine persönliche Video- oder Audiobotschaft sein, sodass der Empfänger des Pakets gleichzeitig mit dem Inhalt des Pakets auch eine persönliche Nachricht erhält. Insbesondere Weihnachts- oder Geburtstagsgeschenke können somit zusammen mit dem Paket versandt werden, um die Geschenke zu personalisieren.

Die Multimediadateien sind vom Empfänger des Pakets abrufbar, indem der QR-Code beispielsweise mit einem Smartphone eingescannt und der im QR-Code dargestellte Link abgerufen wird. Es hat sich jedoch herausgestellt, dass eine derartige Übermittlung personalisierter Daten unsicher ist, da beispielsweise auch eine Zustellkraft, welche die physische Übermittlung des Pakets vornimmt, den QR-Code abrufen kann. Dies hat dazu geführt, dass auf personalisierte Nachrichten verlinkende QR-Codes auf Paketen von den Kunden nicht angenommen wurden.

QR-Codes haben jedoch viele Nachteile. Zum einen handelt es sich hierbei um eine veraltete Technologie, die nicht standardisiert ist, sodass es vorkommen kann, dass nicht alle Scan-Applikationen auf dem Markt den QR-Code lesen können. Weiters muss zum Scannen der QR-Codes zuerst eine Applikation gestartet werden, was gerade für ältere Personen eine große Herausforderung ist. Überdies können die QR-Codes auch mit jedem Kopierer vervielfältigt werden, sodass diese nicht für private Daten geeignet sind. Da die QR-Codes auch optisch kein gutes Bild machen, neigen Kunden dazu, diese nicht auf Paketen oder Geschenken anzubringen.

Es ist daher die Aufgabe der Erfindung, ein Verfahren zum Schützen von personalisierten Daten zu schaffen, welches die genannten Nachteile überwindet. Hierzu sollen die am Paket grundsätzlich frei zugänglichen personalisierten Daten insbesondere vor unbefugten Zugriffen geschützt werden, der Zugriff jedoch weiterhin so einfach wie möglich ausgestaltet werden.

Dieses Ziel wird durch ein Verfahren zum geschützten Übermitteln von personalisierten Daten erzielt, die in einem an einem Objekt, insbesondere einem Paket oder einem Produkt, anbringbaren Datenträger gespeichert oder über einen im Datenträger gespeicherten Link von einem entfernten Datenserver abrufbar sind, wobei bei dem Verfahren die folgenden Schritte abgearbeitet werden:
- Anbringen des Datenträgers an dem Objekt;
- Erstellen der personalisierten Daten mit einem ersten Kommunikationsgerät, wofür Daten von einem Sender des Objekts für einen Empfänger des Objekts zusammengestellt werden;
- Auswählen zumindest eines Teils eines personenbezogenen Datensatzes, welcher bevorzugt in einem Telefonverzeichnis im ersten Kommunikationsgerät gespeichert ist;
- Schützen der erstellten personalisierten Daten, wofür der personenbezogene Datensatz oder dessen Teil als Sicherheitscode zur Verschlüsselung der personalisierten Daten oder des Links verwendet wird;
- Aufbau einer ersten kontaktlosen Kommunikationsverbindung zwischen dem Datenträger und dem ersten Kommunikationsgerät;
- Übertragen und Speichern der personalisierten Daten im Datenträger und/oder im entfernten Datenserver und/oder Übertragen und Speichern des Links im Datenträger;
- Verbringen des Objekts vom Sender des Objekts zum Empfänger des Objekts;
- Aufbau einer zweiten kontaktlosen Kommunikationsverbindung zwischen dem Datenträger und einem zweiten Kommunikationsgerät des Empfängers des Objekts;
- Abfragen des Sicherheitscodes, der zum Schutz der personalisierten Daten verwendet wurde, im zweiten Kommunikationsgerät;
- Auslesen der personalisierten Daten aus dem Datenträger und/oder dem entfernten Datenserver unter Verwendung des Sicherheitscodes und wiedergeben der personalisierten Daten.

Bei diesem Verfahren werden die personalisierten Daten dadurch geschützt, dass ein personenbezogener Datensatz herangezogen wird, der sowohl dem Sender als auch dem Empfänger bekannt ist, beispielsweise wenn der personenbezogene Datensatz eine Telefonnummer ist, die bereits vorab in einem Telefonverzeichnis des Senders hinterlegt ist. Dieses Verfahren hat den Vorteil, dass kein eigenes Passwort zwischen Sender und Empfänger ausgetauscht werden muss, um die personalisierten Daten zu schützen. Auch müssen sich weder Sender noch Empfänger bei einem Portal registrieren bzw. verifizieren, um die personalisierten Nachrichten abzurufen.

Da der Empfänger Kenntnis über seine eigenen personenbezogenen Daten oder zumindest Zugang zu diesen hat, kann er diese in einfacher Weise heranziehen, um die personalisierten Daten abzurufen. Der personenbezogene Datensatz müssen für das vorliegende Verfahren nicht geheim sein, sodass der personenbezogene Datensatz beispielsweise auch eine Telefonnummer sein kann. Dies kann deshalb erfolgen, da das Schützen der personalisierten Daten vorrangig vorgenommen wird, um das Auslesen der personalisierten Daten durch Personen zu verhindern, die den Empfänger nicht persönlich kennen. Selbst wenn die Adresse des Empfängers auf einem Paket angegeben wird, wird beispielsweise eine Zustellkraft die Telefonnummer des Empfängers nicht kennen, sodass diese die personalisierten Daten nicht abrufen kann.

Das erfindungsgemäße Verfahren hat überdies den Vorteil, dass nicht zwingend eine eigene Applikation verwendet werden muss, um die personalisierten Daten abzurufen. Das Herunterladen einer eigenen Applikation ist für viele Benutzer abschreckend, sodass derartige Verfahren nicht angenommen werden. Weiters entstehen für jede Applikation Entwicklungskosten und Wartungsaufwand, was jedoch entfallen kann, wenn keine Applikation eingesetzt werden muss.

Einerseits ist es möglich, dass der Empfänger zumindest den Teil des personenbezogenen Datensatzes als Sicherheitscode manuell in das zweite Kommunikationsgerät eingibt, um die personalisierten Daten auszulesen, da der Empfänger seine eigenen personenbezogenen Daten kennt. Hierbei ist bevorzugt, wenn der Schritt des Abfragens des Sicherheitscodes den Schritt des Ausgebens einer Information an den Empfänger umfasst, welcher Teil des personenbezogenen Datensatzes in das zweite Kommunikationsgerät als Sicherheitscode eingegeben werden soll. Beispielsweise kann an einem Bildschirm des zweiten Kommunikationsgeräts die Nachricht "bitte geben Sie die letzten vier Stellen Ihrer Telefonnummer als Sicherheitscode ein" angezeigt werden.

In einer dazu alternativen Ausführungsform ist bevorzugt, wenn zumindest der Teil des personenbezogenen Datensatzes, bevorzugt der ganze personenbezogene Datensatz, im zweiten Kommunikationsgerät des Empfängers hinterlegt ist und beim Schritt des Abfragens des Sicherheitscodes herangezogen wird. Dadurch muss der Empfänger den personenbezogenen Datensatz nicht manuell in das zweite Kommunikationsgerät eingeben, wodurch sich das Verfahren für den Empfänger vereinfacht ausführen lässt.

Bei der letztgenannten Ausführungsform ist es möglich, dass der personenbezogene Datensatz an einem bestimmten Speicherort des zweiten Kommunikationsgeräts hinterlegt sind und der Empfänger zum Eingeben des personenbezogenen Datensatzes den Speicherort auswählt. Beispielsweise kann der Empfänger aus einem Telefonverzeichnis im zweiten Kommunikationsgerät seinen eigenen Kontakt auswählen. Bevorzugt wird jedoch beim Abfragen des Sicherheitscodes der Teil des personenbezogenen Datensatzes aus dem zweiten Kommunikationsgerät abgerufen. Dies kann vollautomatisch erfolgen, d.h. der Empfänger muss je nach Ausführungsform das Abrufen des personenbezogenen Datensatzes auch nicht bestätigen. Durch diese Maßnahmen kann das Verfahren auf Seiten des Empfängers so einfach wie möglich durchgeführt werden. Dies ist insbesondere dann vorteilhaft, wenn der Empfänger nicht mit dem zweiten Kommunikationsgerät vertraut ist, wie es insbesondere bei betagten Menschen oder Kindern der Fall sein kann. Das erfindungsgemäße Verfahren eignet sich somit für alle Altersklassen.

Weiters bevorzugt ist der personenbezogene Datensatz in einer SIM-Karte des zweiten Kommunikationsgeräts hinterlegt und wird beim Schritt des Abfragens des Sicherheitscodes von der SIM-Karte abgerufen. Dies hat den Vorteil, dass der personenbezogene Datensatz auf einem vom Kommunikationsgerät gesonderten Datenträger gespeichert wird, sodass die Sicherheit des Systems erhöht wird. Insbesondere können unbefugte Personen, die nicht im Besitz der korrekten SIM-Karte sind, auf der die Telefonnummer als personenbezogener Datensatz gespeichert ist, die personalisierten Daten nicht entschlüsseln.

Prinzipiell können auf dem ersten und auf dem zweiten Kommunikationsgerät keine oder auch unterschiedliche Anwendungen bzw. Applikationen zum Einsatz kommen, um die erfindungsgemäßen Schritte durchzuführen. Beispielsweise kann auf dem ersten Kommunikationsgerät keine Applikation zum Einsatz kommen und die Schritte auf dem zweiten Kommunikationsgerät können browserbasiert durchgeführt werden. In einer anderen Ausführungsform kann jedoch auch dieselbe Applikation sowohl auf dem ersten als auch auf dem zweiten Kommunikationsgerät gespeichert sein, wobei die Applikation auf dem ersten Kommunikationsgerät zumindest die Schritte des Erstellens, des Schützens, des Aufbaus der ersten kontaktlosen Kommunikationsverbindung und des Übertragens durch die Applikation im ersten Kommunikationsgerät abgewickelt werden und die Schritte des Aufbaus der zweiten kontaktlosen Kommunikationsverbindung, des Abfragens und des Auslesens durch die Applikation im zweiten Kommunikationsgerät abgewickelt werden. Dies erhöht die Sicherheit des Verfahrens, denn der Verschlüsselungsalgorithmus zum Verschlüsseln und Entschlüsseln der personalisierten Daten muss nicht über mehrere Anwendungen aufgeteilt werden.

Weiters bevorzugt ist der Datenträger ein NFC-Chip. NFC-Chips haben den Vorteil, dass diese von handelsüblichen Mobiltelefonen mit NFC-Funktionalität ohne besondere Konfiguration schnell beschrieben bzw. ausgelesen werden können, ohne dass es einer besonderen Konfiguration oder einer externen Schnittstelle bedarf. Dadurch kann das erfindungsgemäße Verfahren besonders benutzerfreundlich ausgestaltet werden.

Da es für den Sender in der Regel zu umständlich ist, Nummern oder Buchstaben einzutippen oder sogar zu identifizieren, um den personenbezogenen Datensatz auszuwählen, kann für den Schritt des Auswählens des personenbezogenen Datensatzes ein mit dem personenbezogenen Datensatz verknüpfter Datensatz des Empfängers gewählt werden. Dies ermöglicht, dass beispielsweise am ersten Kommunikationsgerät einfach ein Kontakt bzw. Name des Empfängers gewählt wird, der wiederum mit der Telefonnummer verknüpft ist, wenn diese als personenbezogener Datensatz verwendet wird. Auch diese Maßnahme hilft dabei, die Benutzerfreundlichkeit des Verfahrens zu erhöhen.

In einer weiteren Ausführungsform kann der Sicherheitscode im zweiten Kommunikationsgerät nach dem erstmaligen Eingegeben in einem Speicher gespeichert und für jedes weitere Auslesen aus dem Speicher abgerufen werden. Dies hat den Vorteil, dass einerseits der Empfänger den personenbezogenen Datensatz nur einmal eingeben muss, wenn diese manuell in das zweite Kommunikationsgerät eingegeben werden, oder dass andererseits weniger Rechenleistung benötigt wird, wenn der personenbezogenen Datensatz ohne manuelle Eingabe automatisch aus dem zweiten Kommunikationsgerät abgerufen werden.

In der letztgenannten Ausführungsform ist in Kombination mit der vorgenannten Applikation bevorzugt, wenn zumindest der Teil des personenbezogenen Datensatzes bei einem erstmaligen Initialisieren der Applikation im zweiten Kommunikationsgerät eingegeben und im Speicher gespeichert wird. Dies hat den Vorteil, dass der Empfänger nicht erst beim Auslesen der personalisierten Daten den Sicherheitscode eingeben muss. Gerade beim Empfang des Pakets und beim Abrufen der personalisierten Daten hat der Empfänger üblicherweise keine Zeit bzw. Lust, Sicherheitscodes in das zweite Kommunikationsgerät einzugeben. Dieses Problem wird wie beschrieben dadurch gelöst, dass die Applikation bereits vorab auf dem zweiten Kommunikationsgerät initialisiert werden kann, wodurch ein späteres Eingeben des personenbezogenen Datensatzes entfallen kann.

Einerseits ist es möglich, mit dem erfindungsgemäßen Verfahren reine Textdaten zu übertragen. Durch das erfindungsgemäße Verfahren ist es jedoch auch möglich, dass audiovisuelle Daten auf dem Datenträger gespeichert werden, beispielsweise Videos oder Sprachnachrichten, was beispielsweise mit QR-Codes nicht möglich ist.

Weiters vorteilhaft kann vorgesehen werden, dass der Datenträger unüberschreibbar ist, um eine Wiederverwendung des Datenträgers zu verhindern. Dadurch kann erzielt werden, dass jeder Datenträger nur einmal verwendet wird. Alternativ könnte der Datenträger auch wiederbeschreibbar ausgebildet werden, um diesen mehrmals zu benutzen.

Vorteilhafte und nicht einschränkende Ausführungsformen der Erfindung werden nachfolgend anhand der Zeichnungen näher erläutert.
Figur 1 zeigt schematisch einen Sendevorgang eines Pakets zwischen einem Sender und einem Empfänger, wobei mit dem Paket gleichzeitig personalisierte Daten geschützt übermittelt werden.
Figur 2 zeigt ein Blockschaltbild des Verfahrens zum geschützten Übermitteln von personalisierten Daten von Figur 1.

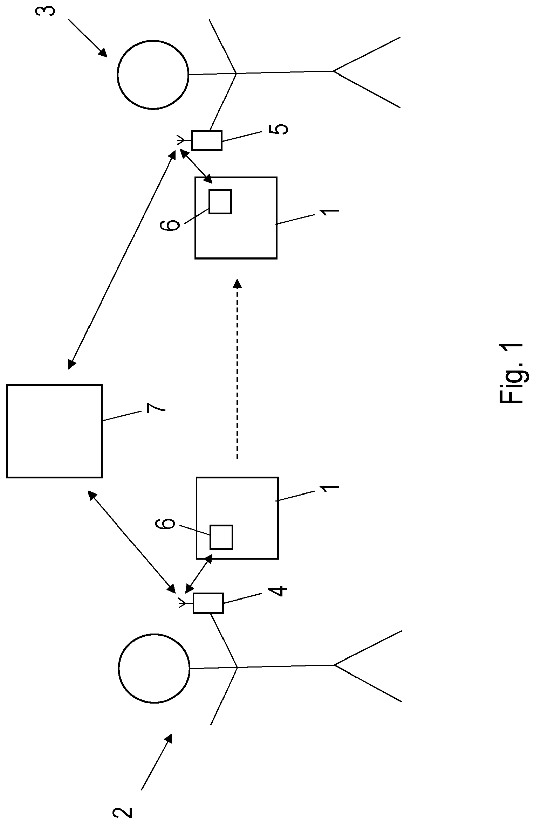

Figur 1 zeigt ein Paket 1, welches von einem Sender 2 zu einem Empfänger 3 versandt wird. Sowohl Sender 2 als auch Empfänger 3 können Einzelpersonen oder eine Gruppe von Personen sein. Der Zustellvorgang des Pakets 1 vom Sender 2 zum Empfänger 3 erfolgt üblicherweise durch einen Drittanbieter, sodass das Paket 1 in der Regel auch von Personen gehandhabt wird, die den Sender oder den Empfänger nicht kennen.

Gleichzeitig soll mit dem Paket 1 eine persönliche Nachricht versandt werden, die beispielsweise eine Grußbotschaft oder Glückwünsche umfassen kann. Beispielsweise wird in dem Paket 1 ein Geburtstagsgeschenk versandt und als persönliche Nachricht werden Geburtstagsglückwünsche übermittelt. Die genannte persönliche Nachricht ist jedoch unabhängig von ihrem vermittelten Inhalt, sodass diese im Folgenden allgemein als personalisierte Daten bezeichnet wird. Die persönlichen Daten sollen gleichzeitig mit dem Paket 1 vom Sender 2 derart geschützt an den Empfänger 3 übermittelt werden, dass die personalisierten Daten nicht durch eine dritte Person wie beispielsweise eine Zustellkraft ausgelesen werden können. Zu diesem Zweck wird ein System umfassend ein erstes Kommunikationsgerät 4, ein zweites Kommunikationsgerät 5 und einen Datenträger 6 eingesetzt.

Das erste Kommunikationsgerät 4 ist üblicherweise im Besitz des Senders 3 und kann beispielsweise ein handelsübliches Mobiltelefon sein, bevorzugt mit Audio- und/oder Videoaufnahmefunktion zur Erstellung der personalisierten Daten. Auch ein Desktop PC des Senders 3 könnte als erstes Kommunikationsgerät 4 eingesetzt werden. Alternativ könnte das erste Kommunikationsgerät 4 jedoch auch im Besitz eines Drittanbieters sein und beispielsweise als stationärer Fotoautomat, auch Photo-Booth oder Fotobox genannt, ausgebildet sein, der den mit den personalisierten Daten beschriebenen Datenträger 6 ausgibt. Generell kann das erste Kommunikationsgerät 4 somit ein bewegliches oder ein im Allgemeinen unbewegliches Objekt sein.

Das zweite Kommunikationsgerät 5 ist üblicherweise im Besitz des Empfängers 3 und beispielsweise als handelsübliches Mobiltelefon ausgebildet. Dadurch kann der Empfänger 3 die personalisierten Daten auslesen, sobald er das Paket 1 erhält, da der Empfänger 3 sein Mobiltelefon in der Regel mit sich trägt. Alternativ könnte das zweite Kommunikationsgerät 5 jedoch auch ein unbewegliches Objekt wie ein Desktop PC oder ein stationärer Fotoautomat sein, wobei der Empfänger 3 in diesen Fällen jedoch mit dem Paket 1 bzw. dem Datenträger 6 zum zweiten Kommunikationsgerät 5 gehen müsste, um die personalisierten Daten auszulesen.

Der Datenträger 6 ist derart ausgebildet, dass er entweder die personalisierten Daten oder einen Link speichern kann, der auf eine Speicheradresse in einem entfernten Datenserver 7 verlinkt. In der letztgenannten Ausführungsform sind die personalisierten Daten von dieser Speicheradresse vom Datenserver 7 abrufbar. Der Datenträger 6 soll weiters dazu in der Lage sein, dass das erste und das zweite Kommunikationsgerät 4, 5 eine kontaktlose Kommunikationsverbindung mit dem Datenträger 6 herstellen können. Zu diesem Zweck umfassen das erste Kommunikationsgerät 4, das zweite Kommunikationsgerät 5 und der Datenträger 6 jeweils einen Transmitter, einen Receiver oder einen Transceiver. Ausführungsformen mit Transmittern oder Receivern sind deshalb möglich, da nicht immer eine bidirektionale Kommunikation notwendig ist.

Die genannte Kommunikationsverbindung ist bevorzugt eine unmittelbare Kurzreichweitenverbindung, sodass sich die Kommunikationsgeräte 4, 5 in einem vorbestimmten Abstand zum Datenträger 6 befinden müssen, um eine Kommunikationsverbindung aufzubauen, was zur Sicherheit des Systems 1 beiträgt. Es kann jeder bekannte Kommunikationsstandard für diese Kommunikation eingesetzt werden, beispielsweise ein NFC (Near Field Communication), RFID (Radio Frequency Identification), Bluetooth oder WLAN (Wireless Local Area Network) -Standard. Alternativ könnte die Kommunikationsverbindung beispielsweise aber auch über zelluläre Mobilfunknetze durchgeführt werden.

Um die genannten Funktionen auszubilden, ist der Datenträger 6 bevorzugt als NFC-Chip (Near Field Communication-Chip) oder allgemeiner als RFID-Chip (Radio Frequency Identification-Chip) ausgebildet. Jedoch könnte auch jeder andere Schaltkreis als Datenträger 5 verwendet werden, wenn dieser beispielsweise einen Speicher und einen Receiver, Transmitter oder Transceiver zur Kommunikation mit den Kommunikationsgeräten 4, 5 umfasst.

Der Datenträger 6 kann überdies derart ausgebildet sein, dass er mit einer Klebefläche ausgestattet ist, sodass der Datenträger 6 einfach vom Sender 2 am Paket 1 angebracht werden kann. Alternativ könnte der Datenträger 6 unmittelbar in einem Karton oder einem anderen Verpackungsmaterial des Pakets 1 eingearbeitet sein.

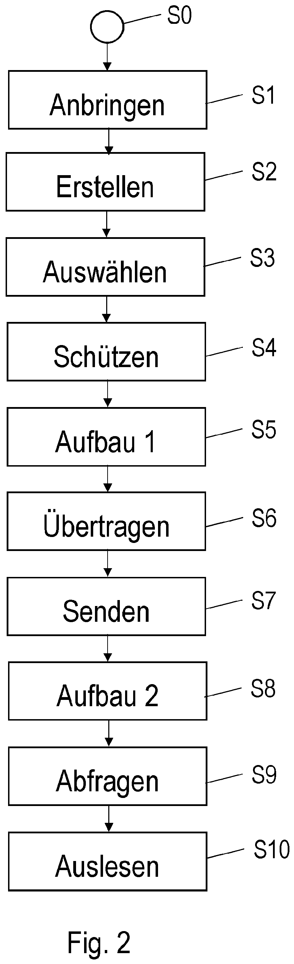

Das erfindungsgemäße Verfahren zum geschützten Übermitteln der personalisierten Daten wird nun im Folgenden anhand der Figur 2 im Detail erläutert.

In einem vorbereitendem Schritt S0 werden das Paket 1 und der Datenträger 6 bereitgestellt. Beispielsweise kann der Datenträger 6 käuflich in einem Supermarkt erworben werden, sodass der Sender 2 diesen zu einem späteren Zeitpunkt in einem nächsten Schritt S1 am Paket 1 anbringen kann. In manchen Ausführungsvarianten kann der Sender 2 das vorbereitete Paket 1 unmittelbar in eine Postfiliale bringen, wo er den Datenträger 6 auch am Paket 1 anbringen und das Paket 1 versenden kann.

Nachdem der Sender 2 den Datenträger 6 im Schritt S1 am Paket 1 angebracht hat, erstellt dieser die personalisierten Daten mit dem ersten Kommunikationsgerät 4 in einem Schritt S2. Hierfür stellt der Sender 2 Daten für den Empfänger 3 zusammen, beispielsweise indem er mit dem Kommunikationsgerät 4 eine Audio- oder Videobotschaft aufnimmt oder digital einen Text schreibt. Die personalisierten Daten können entweder live aufgenommen oder aus einer Fotogalerie ausgewählt werden, sodass beispielsweise Urlaubsvideos oder Urlaubsfotos vorab aufgezeichnet und zu einem späteren Zeitpunkt auf den Datenträger 5 gespielt werden können.

Um die personalisierten Daten zu schützen, wählt der Sender 2 in einem Schritt S3 einen personenbezogenen Datensatz oder einen Teil davon als Sicherheitscode aus. Der personenbezogene Datensatz ist eine mit dem Empfänger in Verbindung stehende Information, bevorzugt die Telefonnummer. Das Auswählen des personenbezogenen Datensatzes erfolgt entweder dadurch, dass der Sender 2 diesen manuell in das erste Kommunikationsgerät 4 eintippt oder den personenbezogenen Datensatz aus einem Speicher des ersten Kommunikationsgeräts 4 abruft. Hierzu kann das erste Kommunikationsgerät 4 über ein Telefonverzeichnis verfügen, in welchem der personenbezogene Datensatz hinterlegt ist.

Das Telefonverzeichnis kann derart aufgebaut sein, dass darin eine Vielzahl von potentiellen Empfängern 3 und zugehörigen Informationen gespeichert ist. Wenn zu einem Empfänger 3 mehrere Informationen hinterlegt sind, beispielsweise eine Telefonnummer, eine E-Mail-Adresse und ein Geburtsdatum, kann entweder von einer Applikation am ersten Kommunikationsgerät 4 vorbestimmt oder vom Sender 2 gewählt werden, welche Information als personenbezogener Datensatz herangezogen wird. Es ist unabhängig vom Aufbau des Telefonverzeichnisses zudem möglich, dass der Sender 2 entweder den personenbezogenen Datensatz selbst wählt oder einen mit dem personenbezogenen Datensatz verknüpften Datensatz des Empfängers 3 wählt, wodurch durch die Verknüpfung im Telefonverzeichnis der personenbezogene Datensatz gewählt wird.

Als besonders benutzerfreundlich und technisch einfach, jedoch weiterhin mit einer ausreichend hohen Sicherheit, hat sich bewährt, als personenbezogenen Datensatz die Telefonnummer des Empfängers 3 heranzuziehen und als Teil des personenbezogenen Datensatzes und damit als Sicherheitscode die letzten vier Stellen der Telefonnummer des Empfängers 3.

Nach dem Schritt S3 des Auswählens der personenbezogenen Datensatzes 6 werden in einem Schritt S4 die erstellten personalisierten Daten geschützt, indem der personenbezogene Datensatz oder dessen Teil als Sicherheitscode zur Verschlüsselung der personalisierten Daten oder des Links verwendet wird. Werden die personalisierten Daten unmittelbar im Datenträger 6 gespeichert, wird der Sicherheitscode zur Verschlüsselung der Daten eingesetzt, wofür jeder bekannte Verschlüsselungsalgorithmus eingesetzt werden kann. In einfachsten Fall kann die Verschlüsselung auch dadurch erfolgen, dass der Sicherheitscode dem Datensatz der personalisierten Daten angehängt wird und zum Entschlüsseln dem Datensatz wieder abgezogen wird. Im Allgemeinen werden die personalisierten Daten als verschlüsselt bezeichnet, wenn diese nur bei Kenntnis des Sicherheitscodes lesbar sind.

Wird der Link mit dem Sicherheitscode verschlüsselt, kann auch dieser mit klassischen Verschlüsselungsalgorithmen verschlüsselt werden. Jedoch bietet sich insbesondere bei einem Link auch an, den Sicherheitscode als Teil des Links zu verwenden, sodass der vollständige Link durch einen generischen Linkteil und einen durch den Sicherheitscode gebildeten personalisierten Linkteil zusammensetzt. Der generische Linkteil kann beispielsweise eine URL sein und der personalisierte Linkteil ein Verweis auf ein Verzeichnis, in welchem die personalisierten Daten hinterlegt sind.

In einem nächsten Schritt S5 wird eine erste kontaktlose Kommunikationsverbindung zwischen dem Datenträger 6 und dem ersten Kommunikationsgerät 4 aufgebaut, um die personalisierten Daten und/oder den Link in einem Schritt S6 an den Datenträger 6 zu übersenden und in diesem zu speichern. Gegebenenfalls wird eine zusätzliche Kommunikationsverbindung zwischen dem Datenträger 6 und dem entfernten Datenserver 7 aufgebaut und die personalisierten Daten verschlüsselt und/oder unverschlüsselt an diesen übersandt. Für den Schritt S5 haben sich insbesondere die drei im Folgenden erläuterten Vorgehensweisen als günstig herausgestellt.

In einer ersten Ausführungsform, die ohne Link und ohne entfernten Datenserver 7 auskommt, werden die personalisierten Daten verschlüsselt vom ersten Kommunikationsgerät 4 an den Datenträger 6 übersandt. In einer zweiten Ausführungsform werden die personalisierten Daten verschlüsselt vom ersten Kommunikationsgerät 4 an den entfernten Datenserver 7 übersandt und der Link unverschlüsselt vom ersten Kommunikationsgerät 4 an den Datenträger 6 übersandt. In der dritten Ausführungsform werden die personalisierten Daten unverschlüsselt vom ersten Kommunikationsgerät 4 an den entfernten Datenserver 7 übersandt und der Link verschlüsselt vom ersten Kommunikationsgerät 4 an den Datenträger 6 übersandt. In einer vierten Ausführungsform werden die personalisierten Daten verschlüsselt vom ersten Kommunikationsgerät 4 an den entfernten Datenserver 7 übersandt und der Link verschlüsselt vom ersten Kommunikationsgerät 4 an den Datenträger 6 übersandt. Auch können die genannten Ausführungsformen kombiniert werden, insbesondere die erste Ausführungsform mit der zweiten, dritten oder vierten Ausführungsform, um eine Redundanz zu erzeugen, die gegen teilweisen Datenverlust schützt. In allen genannten Ausführungsformen ist der Ausdruck "verschlüsselt" mit dem Ausdruck "durch den Sicherheitscode verschlüsselt" gleichzusetzen.

Sobald die Schritte S2 - S6 vom Sender 2 durchgeführt wurden, kann dieser in einem Schritt S7 das Paket 1 mit aufgeklebtem Datenträger 6 an den Empfänger 3 versenden. Es versteht sich, dass die Schritte S2 - S6 nicht in der Reihenfolge wie oben beispielhaft erläutert durchgeführt werden müssen. Insbesondere kann der Datenträger mit gespeicherten personalisierten Daten bzw. mit gespeichertem Link auch als letzter Schritt vor dem Versenden auf dem Paket 1 angebracht werden.

Während des Zustellvorgangs ist es dritten Personen aufgrund der Verschlüsselung mittels des Sicherheitscodes nicht möglich, die personalisierten Daten auszulesen, da dritte Personen in der Regel keine Kenntnis über den personenbezogenen Datensatz des Empfängers 3 haben.

Sobald dem Empfänger 3 das Paket 1 mit aufgebrachtem Datenträger 6 zugestellt wird, kann dieser die personalisierten Daten auslesen, da er seine eigenen personenbezogenen Daten und damit den Sicherheitscode kennt. Zu diesem Zweck baut der Empfänger 3 eine zweite kontaktlose Kommunikationsverbindung zwischen dem Datenträger 6 und dem zweiten Kommunikationsgerät 5 in einem Schritt S8 auf.

Zur Entschlüsselung der personalisierten Daten wird der Sicherheitscode in einem Schritt S9, der zum Schutz der personalisierten Daten verwendet wurde, abgefragt. Hierzu kann der Empfänger 3 den Sicherheitscode oder auch den gesamten personenbezogenen Datensatz manuell in das zweite Kommunikationsgerät 5 eingeben. Wenn den personenbezogenen Datensatz oder der Sicherheitscode bereits in einem Speicher des zweiten Kommunikationsgeräts 5 hinterlegt sind, kann das Abfragen des Sicherheitscodes bzw. den personenbezogenen Datensatz auch vollautomatisch erfolgen. Hierbei bietet sich auch an, die personenbezogenen Datensatz bzw. den Sicherheitscode auf einer SIM-Karte zu speichern, insbesondere wenn der personenbezogenen Datensatz unüberschreibbar auf der SIM-Karte vorliegen.

Sollte als Sicherheitscode nicht der gesamte personenbezogene Datensatz verwendet werden, sondern nur ein Teil davon, kann die Verkürzung zum Sicherheitscode durch eine Anwendung im zweiten Kommunikationsgerät erfolgen. Auch könnte der Empfänger 3 wissen, dass beispielsweise nur die letzten vier Stellen seiner Telefonnummer als Sicherheitscode verwendet werden, sodass der Empfänger 3 die Verkürzung auch von sich aus vornehmen kann, wenn er den Sicherheitscode manuell eingegeben will.

Nachdem der Sicherheitscode im zweiten Kommunikationsgerät 5 vorliegt, können die personalisierten Daten aus dem Datenträger und/oder dem entfernten Datenserver 7 unter Verwendung des Sicherheitscodes in einem Schritt S10 ausgelesen und auf dem zweiten Kommunikationsgerät 5 wiedergegeben werden. Das Auslesen unter Verwendung des Sicherheitscodes bedeutet, dass die personalisierten Daten und/oder der Link mittels des Sicherheitscodes entschlüsselt werden, sodass diese personalisierten Daten nach der Übertragung im zweiten Kommunikationsgerät 5 unverschlüsselt vorliegen.

Auch die Schritte S6 bis S10 müssen nicht in der Reihenfolge wie oben erläutert vorgenommen werden. Beispielsweise kann zuerst der Sicherheitscode abgefragt und danach die zweite Kommunikationsverbindung aufgebaut werden.

Für den Empfänger 3 ist das Verfahren besonders einfach, wenn der Sicherheitscode nach dem erstmaligen Abfragen im zweiten Kommunikationsgerät 4 gespeichert wird, sofern dieser nicht ohnehin permanent im zweiten Kommunikationsgerät 4 hinterlegt ist. Wenn zum Auslesen bzw. zum Verbindungsaufbau mit dem Datenträger 6 eine eigene Applikation verwendet wird, kann der Sicherheitscode auch beim erstmaligen Initialisieren der Applikation abgefragt und im zweiten Kommunikationsgerät 5 gespeichert werden.

Für das erfindungsgemäße Verfahren bietet sich überdies an, eine eigene Applikation bereitzustellen, die sowohl auf dem ersten als auch auf dem zweiten Kommunikationsgerät 4, 5 gespeichert und dazu ausgebildet ist, zumindest die Schritte S2, S4, S5, S6, S8, S9 und S10 auszuführen, wobei hierzu auch auf externe Applikationen wie einen Media-Player zurückgegriffen werden kann. Hervorzuheben ist jedoch, dass das erfindungsgemäße Verfahren auch ganz ohne eigens entwickelte Applikation auskommen kann.

In einer speziellen Ausführungsform könnte der Datenträger 6 auch nur auslesbar sein, beispielsweise wenn auf jedem im Handel vertriebenen Datenträger 6 ein anderer Link gespeichert ist, der auf eine andere Adresse im entfernten Datenserver 7 verlinkt. Das erste Kommunikationsgerät 4 kann den Link einscannen und die personalisierten Daten mit dem Sicherheitscode verschlüsselt an den Datenserver 7 an die im Link angegebene Speicheradresse übersenden und dort speichern. Das zweite Kommunikationsgerät 4 kann den Link einscannen, die personalisierten Daten von der im Link angegebenen Speicheradresse herunterladen und entschlüsseln. In dieser Ausführungsform könnte der Datenträger 6 sogar ein QR-Code sein, wenn die kontaktlosen Kommunikationsverbindungen Bildaufnahmen sind.

In allen Ausführungsformen können die Schritte des Verschlüsselns und Entschlüsselns lokal in den Kommunikationsgeräten 4, 5 oder auch im entfernten Datenserver 7 durchgeführt werden, wenn der Sicherheitscode an den Datenserver 7 gesandt wird.

Bei den oben erläuterten Ausführungsformen wurde der Datenträger 5 auf einem Paket 1 angebracht. Im Allgemeinen kann statt dem Paket 1 jedoch auch jedes andere Objekt eingesetzt werden, welches von einem Sender 2 zu einem Empfänger 3 verbracht wird. Im Allgemeinen ist der Schritt des Sendens S7 des Pakets 1 somit der Schritt des Verbringens des Objekts. Anstatt eines Pakets 1 kann der Datenträger 5 somit auch unmittelbar auf einem Produkt bzw. einem Geschenk angebracht werden, welches vom Sender 2 mittelbar oder unmittelbar an den Empfänger 3 übergeben oder vom Sender 2 unter einen Weihnachtsbaum gelegt werden kann. Der Datenträger 5 kann hierbei beispielsweise sogar als Namens-Anhänger oder Glückwunschs-Anhänger eingesetzt werden.

## Patentansprüche

1. Verfahren zum geschützten Übermitteln von personalisierten Daten, die in einem an einem Objekt (1), insbesondere einem Paket oder einem Produkt, anbringbaren Datenträger (6) gespeichert oder über einen im Datenträger (6) gespeicherten Link von einem entfernten Datenserver (7) abrufbar sind, **dadurch gekennzeichnet, dass** bei dem Verfahren die folgenden Schritte abgearbeitet werden:
• Anbringen (S1) des Datenträgers (6) an dem Objekt (1);
• Erstellen (S2) der personalisierten Daten mit einem ersten Kommunikationsgerät (4), wofür Daten von einem Sender (2) des Objekts (1) für einen Empfänger (3) des Objekts (1) zusammengestellt werden;
• Auswählen (S3) zumindest eines Teils eines personenbezogenen Datensatzes, welcher bevorzugt in einem Telefonverzeichnis im ersten Kommunikationsgerät (4) gespeichert ist;
• Schützen (S4) der erstellten personalisierten Daten, wofür der personenbezogene Datensatz oder dessen Teil als Sicherheitscode zur Verschlüsselung der personalisierten Daten oder des Links verwendet wird;
• Aufbau (S5) einer ersten kontaktlosen Kommunikationsverbindung zwischen dem Datenträger (6) und dem ersten Kommunikationsgerät (4);
• Übertragen (S6) und Speichern der personalisierten Daten im Datenträger (6) und/oder im entfernten Datenserver (7) und/oder Übertragen und Speichern des Links im Datenträger (6);
• Verbringen (S7) des Objekts (1) vom Sender (2) des Objekts (1) zum Empfänger (3) des Objekts (1);
• Aufbau (S8) einer zweiten kontaktlosen Kommunikationsverbindung zwischen dem Datenträger (6) und einem zweiten Kommunikationsgerät (5) des Empfängers (3) des Objekts (1);
• Abfragen (S9) des Sicherheitscodes, der zum Schutz der personalisierten Daten verwendet wurde, im zweiten Kommunikationsgerät (5);
• Auslesen (S10) der personalisierten Daten aus dem Datenträger (6) und/oder dem entfernten Datenserver (7) unter Verwendung des Sicherheitscodes und Wiedergeben der personalisierten Daten.

2. Verfahren nach Anspruch 1, **dadurch gekennzeichnet, dass** der Schritt des Abfragens (S9) des Sicherheitscodes den Schritt des Ausgebens einer Information an den Empfänger (3) umfasst, welcher Teil des personenbezogenen Datensatzes in das zweite Kommunikationsgerät (5) als Sicherheitscode eingegeben werden soll.

3. Verfahren gemäß Anspruch 1, **dadurch gekennzeichnet, dass** zumindest der Teil des personenbezogenen Datensatzes, bevorzugt der ganze personenbezogene Datensatz, im zweiten Kommunikationsgerät des Empfängers (3) hinterlegt ist und beim Schritt des Abfragens (S9) des Sicherheitscodes herangezogen wird.

4. Verfahren nach Anspruch 3, **dadurch gekennzeichnet, dass** beim Abfragen (S9) des Sicherheitscodes der personenbezogene Datensatz oder dessen Teil ohne Benutzerinteraktion aus dem zweiten Kommunikationsgerät (5) abgerufen wird.

5. Verfahren nach Anspruch 3 oder 4, wobei der personenbezogene Datensatz in einer SIM-Karte des zweiten Kommunikationsgeräts (5) hinterlegt ist und beim Schritt des Abfragens (S9) des Sicherheitscodes von der SIM-Karte abgerufen wird.

6. Verfahren nach einem der Ansprüche 1 bis 5, wobei der Datenträger ein NFC-Chip ist.

7. Verfahren nach einem der Ansprüche 1 bis 6, wobei für den Schritt des Auswählens (S3) des personenbezogenen Datensatzes aus einem Telefonverzeichnis des ersten Kommunikationsgeräts ein mit dem personenbezogenen Datensatz verknüpfter Datensatz des Empfängers ausgewählt wird.

8. Verfahren nach einem der Ansprüche 1 bis 7, wobei der Sicherheitscode im zweiten Kommunikationsgerät (5) nach dem erstmaligen Abfragen in einem Speicher gespeichert und für jedes weitere Auslesen aus dem Speicher abgerufen wird.

9. Verfahren nach einem der Ansprüche 1 bis 8, wobei eine Applikation sowohl auf dem ersten als auch auf dem zweiten Kommunikationsgerät (4, 5) gespeichert ist, und die Applikation auf dem ersten Kommunikationsgerät zumindest die Schritte des Erstellens (S2), des Schützens (S4), des Aufbaus (S5) der ersten kontaktlosen Kommunikationsverbindung und des Übertragens (S6) durch die Applikation im ersten Kommunikationsgerät (4) abgewickelt werden und die Schritte des Aufbaus (S8) der zweiten kontaktlosen Kommunikationsverbindung, des Abfragens (S9) und des Auslesens (S10) durch die Applikation im zweiten Kommunikationsgerät (5) abgewickelt werden.

10. Verfahren nach Anspruch 8 in Verbindung mit Anspruch 9, wobei zumindest der Teil des personenbezogenen Datensatzes bei einem erstmaligen Initialisieren der Applikation eingegeben und im Speicher gespeichert wird.

11. Verfahren nach einem der Ansprüche 1 bis 10, wobei die personalisierten Daten audiovisuelle Daten sind.

12. Verfahren nach einem der Ansprüche 1 bis 11, wobei der Datenträger nur einmal beschreibbar ist.
